# EUROPEAN PATENT APPLICATION

(11) **EP 4 842 096 A1**
(43) Date of publication of application: **18.11.2026**
(21) Application number: 24919998.5
(22) Date of filing: 25.12.2024
(51) Int. Cl.: H04W 72/04

(54) **SYSTEM INFORMATION TRANSMISSION METHOD AND APPARATUS**

(30) Priority: 22.01.2024 CN 202410094591
(71) Applicant: Huawei Technologies Co., Ltd., Shenzhen, Guangdong 518129 (CN)
(72) Inventor: ZHANG, Haisen, Shenzhen, Guangdong 518129 (CN); CHEN, Lei, Shenzhen, Guangdong 518129 (CN)
(74) Representative: Huawei European IPR
(86) International application number: PCT/CN2024/142511
(87) International publication number: WO 2025/156920

(57) **Abstract**

A system information transmission method and an apparatus are provided. The method includes: receiving first system information from a network device, where the first system information indicates basic information required for communication, the first system information is further used for scheduling first subsystem information, and the first subsystem information is related to a first feature; obtaining the first subsystem information based on the first system information if it is determined that the first feature is supported; and communicating with the network device based on the first system information and the first subsystem information. According to the method, the system information related to the first feature (for example, the first subsystem information) is separately sent, whereby the first system information and the system information related to the first feature are sent independently of each other, so that only a terminal device supporting the first feature receives and stores the first subsystem information, thereby improving flexibility of system information transmission.

## Description

### CROSS-REFERENCE TO RELATED APPLICATIONS

This application claims priority to Chinese Patent Application No. 202410094591.7, filed with the China National Intellectual Property Administration on January 22, 2024 and entitled "SYSTEM INFORMATION TRANSMISSION METHOD AND APPARATUS", which is incorporated herein by reference in its entirety.

### TECHNICAL FIELD

This application relates to the field of communication technologies, and in particular, to a system information transmission method and an apparatus.

### BACKGROUND

In a mobile communication system, a base station broadcasts system information (system information, SI) of a cell to enable terminal devices to access the cell and operate properly in the cell. The system information mainly includes a master information block (master information block, MIB) and a system information block (system information block, SIB). 14 types of SIBs are defined: from SIB type (type) 1 to SIB type 21, respectively abbreviated as SIB1, SIB2, ..., and SIB21. The SIBs other than SIB1 are collectively referred to as other system information (other system information, OSI).

With the evolution of mobile communication systems, new features (features) are being introduced, such as non-terrestrial network (non-terrestrial network, NTN) support and extended reality (extended reality, XR) services. Terminal devices supporting different features may require different system information when accessing a cell. Therefore, existing system information cannot meet future requirements. When a plurality of features coexist in a network, how to send system information is an urgent problem to be resolved.

### SUMMARY

This application provides a system information transmission method and an apparatus to improve flexibility of system information transmission.

According to a first aspect, this application provides a system information transmission method. The method is performed by a terminal device or a module or a chip in the terminal device. An example in which the method is performed by the terminal device is used for description herein. The method includes: receiving first system information from a network device, where the first system information indicates basic information required for communication, the first system information is further used for scheduling first subsystem information, and the first subsystem information is related to a first feature; obtaining the first subsystem information based on the first system information if it is determined that the first feature is supported; and communicating with the network device based on the first system information and the first subsystem information.

According to the method provided in this application, system information related to the first feature (for example, the first subsystem information) is separately sent, whereby the first system information and the system information related to the first feature are sent independently of each other, so that only a terminal device supporting the first feature receives and stores the first subsystem information, thereby improving flexibility of system information transmission and communication efficiency.

In a possible implementation, the first subsystem information is ignored if it is determined that the first feature is not supported.

According to the method, a terminal device not supporting the first feature may not store the first subsystem information. In this case, the terminal device not supporting the first feature does not need to store the system information related to the first feature, thereby reducing overheads of the system information, and improving communication efficiency.

In a possible implementation, the method further includes: receiving second system information and second subsystem information, where the second system information indicates other basic information required for communication, the second subsystem information is related to the first feature, and the second subsystem information and the first subsystem information include different information.

In a possible implementation, the first subsystem information indicates dedicated information required for a terminal device supporting the first feature to access a network; and the second subsystem information indicates at least one of the following: dedicated information required for the terminal device supporting the first feature to perform intra-frequency cell reselection, inter-frequency cell reselection, and inter-RAT cell reselection; a dedicated intra-frequency cell reselection parameter and a dedicated blacklist of intra-frequency cells that are required for the terminal device supporting the first feature to perform intra-frequency cell reselection; a dedicated inter-frequency carrier reselection parameter, a dedicated inter-frequency cell reselection parameter, and a dedicated blacklist of inter-frequency cells that are required for the terminal device supporting the first feature to perform inter-frequency cell reselection; and dedicated relevant information for the terminal device supporting the first feature to perform system E-UTRA reselection.

In a possible implementation, the first system information further indicates a correspondence between the first subsystem information and the first feature.

In a possible implementation, the second system information and the second subsystem information are carried in different system information messages.

In a possible implementation, the second subsystem information is carried in a system information message, and start symbol a of a system information window associated with the system information message satisfies: $a = x mod N ;$ and
a system frame number SFN of a radio frame in which the system information window associated with the system information message is located satisfies: $SFN mod T = FLOOR \left(x/N\right) ,$ where
x=(n*α-1)×w, or x=(n-1)×w+L_{off1}, α is a number greater than 1, L_{off1} is an integer greater than 0, n is determined based on a position of the system information message in a list of system information messages included in the first system information, T is a periodicity of the system information message, N is a quantity of symbols included in one radio frame, w is a length of the system information window associated with the system information message, mod represents a modulo operation, and FLOOR() represents a rounding-down operation.

In a possible implementation, the second subsystem information is carried in a system information message, and start symbol a of a system information window associated with the system information message satisfies: $a = x mod N ;$ and
a system frame number SFN of a radio frame in which the system information window associated with the system information message is located satisfies: $SFN mod T = FLOOR \left(x/N\right) + {L}_{off 2} ,$ where
x=(n-1)×w, L_{off2} is an integer greater than 0, T is a periodicity of the system information message, n is determined based on a position of the system information message in a list of system information messages included in the first system information, N is a quantity of symbols included in one radio frame, w is a length of the system information window associated with the system information message, mod represents a modulo operation, and FLOOR() represents a rounding-down operation.

In a possible implementation, the first system information further includes a value tag corresponding to the first feature, and the value tag indicates whether system information corresponding to the first feature is updated.

The terminal device may determine, based on the value tag corresponding to the first feature, whether the system information corresponding to the first feature is updated, so that the terminal device may determine, based on the value tag corresponding to the first feature, whether to receive updated system information.

In a possible implementation, the method further includes: receiving first update indication information from the network device, where the first update indication information indicates that system information related to the features is updated.

In a possible implementation, the first update indication information is carried in a short message, DCI, or a paging message.

In a possible implementation, the method further includes: receiving second update indication information from the network device, where the second update indication information indicates that the system information related to the first feature is updated.

In this implementation, because each feature corresponds to one piece of update indication information, when system information related to one feature is updated, only a terminal device supporting the feature receives updated system information, and another terminal device may ignore the system information related to the feature or not read the system information related to the feature. In this way, power consumption of the terminal device is reduced.

In a possible implementation, the method further includes: receiving updated first subsystem information.

In a possible implementation, the second update indication information is carried in a short message, DCI, or a paging message.

In a possible implementation, the method further includes: receiving a paging message from the network device, where the paging message indicates that system information related to the first feature is updated, and the paging message is scrambled by using a P-RNTI corresponding to the first feature, or a paging occasion of the paging message is determined based on identification information of the first feature.

Because a paging occasion of a paging message corresponding to each feature is determined based on identification information of the feature, a terminal device supporting the first feature does not need to monitor paging messages on all possible POs, and only needs to monitor paging messages the PO determined based on the identification information of the first feature. In this way, a quantity of paging messages that need to be monitored is reduced, and power consumption of the terminal device is reduced.

According to a second aspect, this application provides a system information transmission method. The method is performed by a network device or a module or a chip in the network device. An example in which the method is performed by the network device is used for description herein. The method includes: sending first system information, where the first system information indicates basic information required for communication, the first system information is further used for scheduling first subsystem information, and the first subsystem information is related to a first feature; and sending the first subsystem information based on the first system information.

In a possible implementation, the method further includes: sending second system information and second subsystem information, where the second system information indicates other basic information required for communication, the second subsystem information is related to the first feature, and the second subsystem information and the first subsystem information include different information.

In a possible implementation, the first subsystem information indicates dedicated information required for a terminal device supporting the first feature to access a network; and the second subsystem information indicates at least one of the following: dedicated information required for the terminal device supporting the first feature to perform intra-frequency cell reselection, inter-frequency cell reselection, and inter-RAT cell reselection; a dedicated intra-frequency cell reselection parameter and a dedicated blacklist of intra-frequency cells that are required for the terminal device supporting the first feature to perform intra-frequency cell reselection; a dedicated inter-frequency carrier reselection parameter, a dedicated inter-frequency cell reselection parameter, and a dedicated blacklist of inter-frequency cells that are required for the terminal device supporting the first feature to perform inter-frequency cell reselection; and dedicated relevant information for the terminal device supporting the first feature to perform system E-UTRA reselection.

In a possible implementation, the first system information further indicates a correspondence between the first subsystem information and the first feature.

In a possible implementation, the second subsystem information is carried in a system information message, and start symbol a of a system information window associated with the system information message satisfies: $a = x mod N ;$ and
a system frame number SFN of a radio frame in which the system information window associated with the system information message is located satisfies: $SFN mod T = FLOOR \left(x/N\right) ,$ where
x=(n*α-1)×w, or x=(n-1)×w+L_{off1}, α is a number greater than 1, L_{off1} is an integer greater than 0, n is determined based on a position of the system information message in a list of system information messages included in the first system information, T is a periodicity of the system information message, N is a quantity of symbols included in one radio frame, w is a length of the system information window associated with the system information message, mod represents a modulo operation, and FLOOR() represents a rounding-down operation.

In a possible implementation, the second subsystem information is carried in a system information message, and start symbol a of a system information window associated with the system information message satisfies: $a = x mod N ;$ and
a system frame number SFN of a radio frame in which the system information window associated with the system information message is located satisfies: $SFN mod T = FLOOR \left(x/N\right) + {L}_{off 2} ,$ where
x=(n-1)×w, L_{off2} is an integer greater than 0, T is a periodicity of the system information message, n is determined based on a position of the system information message in a list of system information messages included in the first system information, N is a quantity of symbols included in one radio frame, w is a length of the system information window associated with the system information message, mod represents a modulo operation, and FLOOR() represents a rounding-down operation.

In a possible implementation, the first system information further includes a value tag corresponding to the first feature, and the value tag indicates whether system information corresponding to the first feature is updated.

In a possible implementation, the method further includes: sending first update indication information from the network device, where the first update indication information indicates that system information related to the features is updated.

In a possible implementation, the first update indication information is carried in a short message, DCI, or a paging message.

In a possible implementation, the method further includes: receiving second update indication information from the network device, where the second update indication information indicates that the system information related to the first feature is updated.

In a possible implementation, the method further includes: sending updated first subsystem information.

In a possible implementation, the second update indication information is carried in a short message, DCI, or a paging message.

In a possible implementation, the method further includes: sending a paging message from the network device, where the paging message indicates that the system information related to the first feature is updated, and the paging message is scrambled by using a P-RNTI corresponding to the first feature, or a paging occasion of the paging message is determined based on identification information of the first feature.

According to a third aspect, this application further provides a communication apparatus. The communication apparatus can implement any method provided in any one of the first aspect and the second aspect. The communication apparatus may be implemented by hardware, or may be implemented by executing corresponding software by the hardware. The hardware or the software includes one or more units or modules corresponding to the foregoing functions.

In a possible implementation, the communication apparatus includes a processor. The processor is configured to support the communication apparatus in performing a corresponding function of the network device, the terminal device, or a core network device in the foregoing methods. The communication apparatus may further include a memory. The memory may be coupled to the processor, and the memory stores program instructions and data that are necessary for the communication apparatus. Optionally, the communication apparatus further includes an interface circuit. The interface circuit is configured to support communication between the communication apparatus and a device such as a terminal device.

In a possible implementation, the communication apparatus includes corresponding functional modules respectively configured to implement the steps in the foregoing method. The function may be implemented by hardware, or may be implemented by executing corresponding software by the hardware. The hardware or software includes one or more modules corresponding to the foregoing functions.

In a possible implementation, a structure of the communication apparatus includes a processing unit and a communication unit. These units may perform corresponding functions in the foregoing method examples. For details, refer to descriptions in the method provided in any one of the first aspect and the second aspect. The details are not described herein again.

According to a fourth aspect, a communication apparatus is provided. The communication apparatus includes a processor and an interface circuit. The interface circuit is configured to receive a signal from a communication apparatus other than the communication apparatus and transmit the signal to the processor, or send a signal from the processor to a communication apparatus other than the communication apparatus. The processor is configured to implement a functional module of the method according to any possible implementation of any one of the first aspect and the second aspect by using a logic circuit or by executing a computer program or instructions. Optionally, the communication apparatus further includes a memory, and the memory is configured to store the computer program or the instructions.

According to a fifth aspect, a computer-readable storage medium is provided. The computer-readable storage medium stores a computer program or instructions. When the computer program or the instructions are executed by a processor, the method in any possible implementation of any one of the first aspect and the second aspect is implemented.

According to a sixth aspect, a computer program product storing instructions is provided. When a computer reads and executes the computer program product, the method according to any possible implementation of any one of the first aspect and the second aspect is implemented.

According to a seventh aspect, a circuit is provided. The circuit is configured to perform the method in any possible implementation of any one of the first aspect and the second aspect. The circuit may include a chip circuit. Optionally, the circuit may be further coupled to a memory.

According to an eighth aspect, a chip is provided. The chip includes a processor. When executing a computer program or instructions, the processor is configured to implement the method according to any possible implementation of any one of the first aspect and the second aspect. Optionally, the chip may further include a memory. The chip may include a chip, or may include a chip and another discrete device.

According to a ninth aspect, a communication apparatus is provided, and includes a processor. The processor implements the method in any possible implementation of any one of the first aspect and the second aspect by using a logic circuit or by executing a computer program or instructions.

According to a tenth aspect, a communication apparatus is provided. The communication apparatus includes a unit or a module configured to perform the method according to any possible implementation of any one of the first aspect and the second aspect.

According to an eleventh aspect, an embodiment of this application further provides a communication system. The communication system includes a terminal device configured to implement the method according to any one of the first aspect and the possible implementations of the first aspect, and a network device configured to implement the method according to any one of the second aspect and the possible implementations of the second aspect.

### BRIEF DESCRIPTION OF DRAWINGS

FIG. 1 is a diagram of a network device architecture according to an embodiment of this application;
FIG. 2 is a diagram of a network architecture to which an embodiment of this application is applicable;
FIG. 3 is a diagram of a network architecture to which an embodiment of this application is applicable;
FIG. 4 is a diagram of a network architecture to which an embodiment of this application is applicable;
FIG. 5 is a schematic flowchart of a system information transmission method according to an embodiment of this application;
FIG. 6 is a diagram of SI message windows according to an embodiment of this application;
FIG. 7 is a diagram of a structure of a communication apparatus according to an embodiment of this application;
FIG. 8 is a diagram of a structure of a communication apparatus according to an embodiment of this application; and
FIG. 9 is a diagram of a structure of a communication apparatus according to an embodiment of this application.

### DESCRIPTION OF EMBODIMENTS

The following describes the technical solutions in embodiments of this application with reference to the accompanying drawings in embodiments of this application. It is clear that the described embodiments are merely some but not all of embodiments of this application. In this application, the terms "first" and "second" and corresponding term numbers are intended to distinguish between similar objects but do not necessarily describe a specific order or sequence. It should be understood that the terms used in such a way are interchangeable in proper circumstances, which is merely a discrimination manner that is used when objects having a same attribute are described in embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, system, product, or device. The method and an apparatus provided in embodiments of this application are based on a same or similar technical concept. Because problem resolving principles of the method and the apparatus are similar, mutual reference may be made to implementations of the apparatus and the method. Repeated descriptions are not provided again.

The method provided in embodiments of this application may be applied to various mobile communication systems, for example, internet of things (internet of things, IoT), narrowband internet of things (narrowband internet of things, NB-IoT), a 4th generation (4th generation, 4G) communication system (for example, long term evolution (long term evolution, LTE)), a 5th generation (5th generation, 5G) communication system (for example, 5G new radio (new radio, NR)), an LTE and NR hybrid architecture, or a new communication system emerging in 6G or future communication development. Alternatively, the communication system may include a machine to machine (machine to machine, M2M) network, a machine type communication (machine type communication, MTC) network, or another network.

The following first describes some terms in embodiments of this application, to facilitate understanding of a person skilled in the art.

In embodiments of this application, the network device may be a device in a wireless network, and the network device may also be referred to as a network apparatus, a radio access network device, or an access network device. For example, the network device may be a radio access network (radio access network, RAN) node that connects a terminal device to the wireless network, and may also be referred to as an access network device. The network device includes but is not limited to: a base station (base station), an evolved NodeB (evolved NodeB, eNodeB), a transmission-reception point (transmission reception point, TRP), a next generation NodeB (next generation NodeB, gNB) in a 5th generation (5th generation, 5G) mobile communication system, an access network device in an open radio access network (open radio access network, O-RAN), a next generation base station in a 6th generation (6th generation, 6G) mobile communication system, a base station in a future mobile communication system, an access node in a wireless fidelity (wireless fidelity, Wi-Fi) system or the like; or may be a module or unit that completes a part of functions of the base station, for example, may be a central unit (central unit, CU), a distributed unit (distributed unit, DU), a central unit control plane (CU control plane, CU-CP) module, or a central unit user plane (CU user plane, CU-UP) module. The access network device may be a macro base station, may be a micro base station or an indoor base station, or may be a relay node, a donor node, or the like. A specific technology and a specific device form that are used by the network device are not limited in this application.

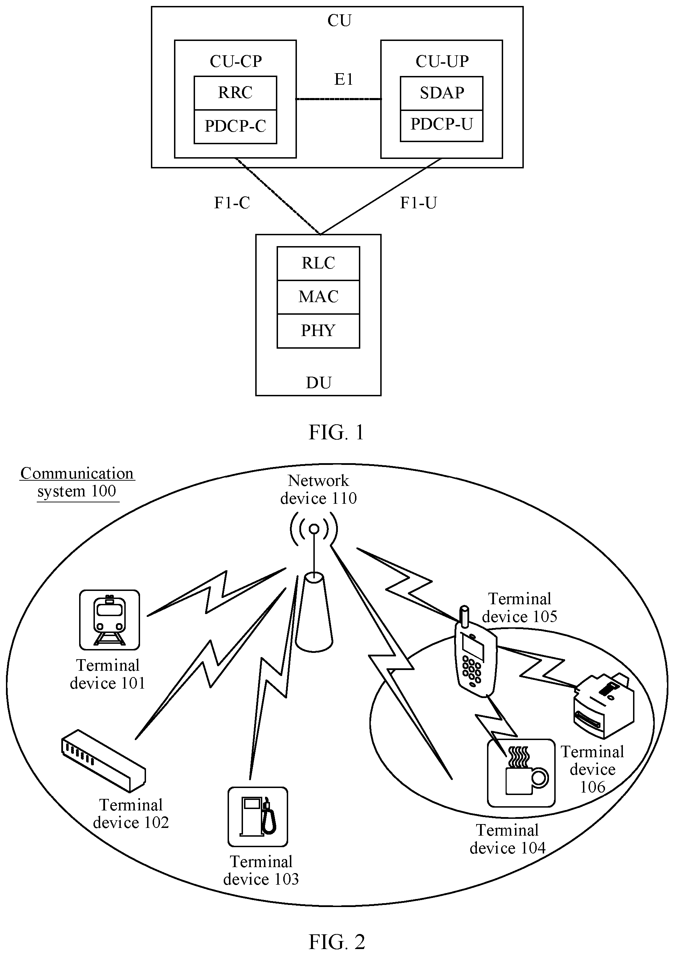

As shown in FIG. 1, in some implementations, the network device may include a central unit (central unit, CU) and/or a distributed unit (distributed unit, DU). The RAN device including a CU node and a DU node separates protocol layers of a gNB in an NR system. Functions of some protocol layers are controlled by the CU in a centralized manner. Functions of some or all remaining protocol layers are distributed in the DU, and the CU controls the DU in a centralized manner. Further, the CU may be further divided into a control plane (CU-CP) and a user plane (CU-UP). The CU-CP is responsible for a control plane function, mainly including radio resource control (radio resource control, RRC) and a packet data convergence protocol (packet data convergence protocol, PDCP) corresponding to the control plane (namely, PDCP-C). The PDCP-C is mainly responsible for data encryption and decryption, integrity protection, data transmission, and the like on a control plane. The CU-UP is responsible for a user plane function, mainly including a service data adaptation protocol (service data adaptation protocol, SDAP) and a PDCP corresponding to the user plane (namely, PDCP-U). The SDAP is mainly responsible for processing data of a core network and mapping a flow (flow) to a bearer. The PDCP-U is mainly responsible for encryption and decryption, integrity protection, header compression, sequence number maintenance, data transmission, and the like on a data plane. The CU-CP and the CU-UP are connected through an E1 interface. The CU-CP, on behalf of the gNB, is connected to the core network through an NG interface and connected to the DU through an F1 interface-control plane (namely, F1-C). The CU-UP is connected to the DU through an F1 interface-user plane (namely, F1-U). Certainly, in another possible implementation, the PDCP-C is alternatively in the CU-UP.

It may be understood that, in different systems, the CU (including the CU-CP or the CU-UP) or the DU may alternatively have different names, but a person skilled in the art can understand meanings of the names. For example, in an open radio access network (open radio access network, O-RAN) system, the CU may also be referred to as an O-CU (open CU), the DU may also be referred to as an O-DU, the CU-CP may also be referred to as an O-CU-CP, and the CU-UP may also be referred to as an O-CU-UP. For ease of description, the CU, the CU-CP, the CU-UP, and the DU are used as examples for description in this application. The network device may further include an active antenna unit (active antenna unit, AAU). The CU implements some functions of the gNB, and the DU implements some functions of the gNB. For example, the CU is responsible for processing a non-real-time protocol and service, to implement functions of an RRC layer. The DU is responsible for processing a physical layer protocol and a real-time service, and implements functions of a radio link control (radio link control, RLC) layer, a media access control (media access control, MAC) layer, and a physical (physical, PHY) layer. In some deployments, the CU may be further divided into a central unit control plane (CU-CP) node and a central unit user plane (CU-UP) node. The CU-CP is responsible for the control plane function, and the CU-UP is responsible for the user plane function.

The terminal device in embodiments of this application may be a wireless terminal apparatus that can receive scheduling and indication information from the network apparatus. The terminal device may be referred to as a terminal apparatus, and may also be referred to as user equipment (user equipment, UE), a terminal, a mobile station (mobile station, MS), a mobile terminal (mobile terminal, MT), or the like. The terminal apparatus may be a device with a wireless communication function (for providing voice/data connectivity to a user), for example, a handheld device, a vehicle-mounted device, or a vehicle-mounted module having a wireless connection function. Currently, some examples of terminal apparatuses are: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in an internet of vehicles, a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a device-to-device (device-to-device, D2D) terminal apparatus, a vehicle to everything (vehicle to everything, V2X) communication terminal apparatus, a smart vehicle, an in-vehicle infotainment (also referred to as a vehicle-mounted sending unit) (telematics box, T-box), a machine-to-machine/machine-type communication (machine-to-machine/machine-type communication, M2M/MTC) terminal apparatus, an internet of things (internet of things, IoT) terminal apparatus, and the like. For example, the terminal apparatus may be a vehicle-mounted device, an entire vehicle device, a vehicle-mounted module, a vehicle, an on-board unit (on-board unit, OBU), a roadside unit (roadside unit, RSU), a T-box, a chip, a system on chip (system on chip, SoC), or the like. The chip or the SoC may be mounted in a vehicle, an OBU, an RSU, or a T-box. The wireless terminal in industrial control may be a camera, a robot, or the like. The wireless terminal in the smart home may be a television, an air conditioner, a sweeper robot, a speaker, a set-top box, or the like. The terminal device may alternatively be a V2X device, for example, a smart car (smart car or intelligent car), a digital car (digital car), an unmanned car (unmanned car, driverless car, pilotless car, or automobile), a self-driving car (self-driving car or autonomous car), a pure electric vehicle (pure EV or Battery EV), a hybrid electric vehicle (hybrid electric vehicle, HEV), a range extended electric vehicle (range extended EV, REEV), a plug-in hybrid electric vehicle (plug-in HEV, PHEV), a new energy vehicle (new energy vehicle), or a road site unit (road site unit, RSU). The terminal device may alternatively be a device in device to device (device to device, D2D) communication, for example, an electricity meter or a water meter. In addition, in embodiments of this application, the terminal device may alternatively be a terminal device in an IoT system. An IoT is an important part of future development of information technologies. A main technical feature of the IoT is connecting a thing to a network through a communication technology, to implement an intelligent network for interconnection between a person and a machine or between one thing and another.

In this application, predefined content is usually defined in a standard, does not need to be configured by another device, and is information recorded/written in advance in hardware and/or software of the terminal apparatus, or may be understood as information that cannot be changed by a network apparatus or another terminal apparatus. Preconfigured content is usually information recorded/written in advance in hardware and/or software of the terminal apparatus, is determined by a factory device vendor, and may be changed by using software or hardware.

A (pre)configuration may be classified into a network apparatus (pre)configuration and a terminal apparatus (pre)configuration. If a (pre)configuration is a network apparatus (pre)configuration, the (pre)configuration may be performed based on a system information block (system information block, SIB) or RRC signaling. If a (pre)configuration is a terminal apparatus (pre)configuration, the (pre)configuration may be performed based on PC5-RRC signaling.

FIG. 2 is a diagram of an example architecture of a communication system 100 to which this application is applicable. Methods in embodiments of this application may be applied to the communication system 100 shown in FIG. 2. It should be understood that the communication system 100 to which methods in embodiments of this application are applied may include more or fewer network devices or terminal devices.

The network device or the terminal device in FIG. 2 may be hardware, may be software obtained through functional division, or may be a combination thereof. The network device or the terminal device in FIG. 2 may communicate with each other by using another device or network element.

In the communication system 100 shown in FIG. 2, a communication system 100 includes a network device 110 and terminal devices 101 to 106. In the communication system 100, the network device 110 may send downlink data to the terminal devices 101 to 106. Certainly, the terminal devices 101 to 106 may also send uplink data to the network device 110. The communication system 100 may be an LTE network, an NR network, a device-to-device (device-to-device, D2D) network, a machine-to-machine (machine-to-machine, M2M) network, or the like.

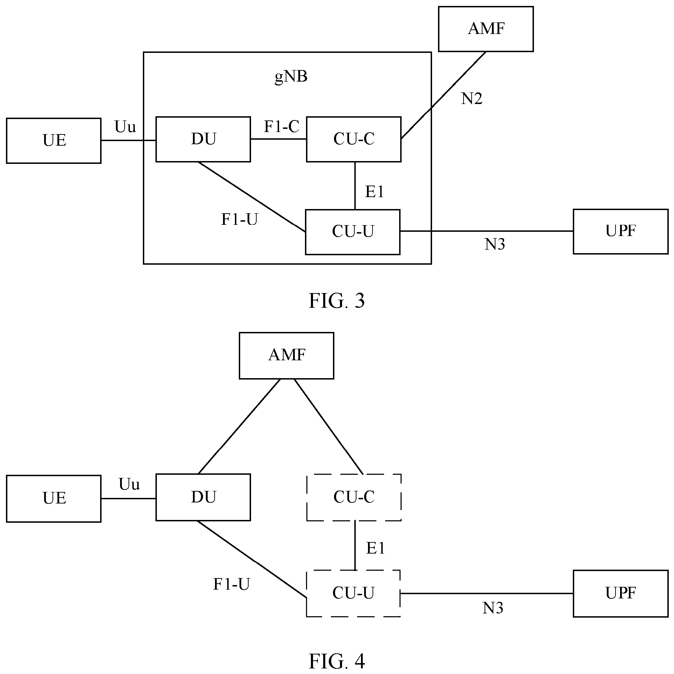

In this application, when the network device is a gNB, the network device may include at least one of a DU, a CU-C, and a CU-U. In an implementation, as shown in FIG. 3, the DU, the CU-C, and the CU-U may be integrated as a gNB to provide a service for UE. The CU-C is connected to a core network element, for example, an access and mobility management function (access and mobility management function, AMF) through an N2 interface. The CU-U is connected to a network element, for example, a user plane function (user plane function, UPF). FIG. 3 is merely an example, and the CU-C and the CU-U may also be combined into a CU entity.

In another implementation, as shown in FIG. 4, some functions of the gNB are integrated into some network elements of a core network or become some independent network elements, and directly communicate with a service-based bus of a 5GC core (5G core, 5GC). For example, a DU, a CU-C, and a CU-U are independent modules, the DU and the CU-C are separately connected to an AMF, and the CU-U is connected to a UPF and the like.

In this application, the DU included in the gNB may be an open DU (open DU, O-DU) in an open radio access network (open radio access network, O-RAN) architecture, and the CU included in the gNB may be an open CU (open CU, O-CU) in the O-RAN architecture.

System information (System Information, SI) is information broadcast by a base station in a mobile network. The terminal device may obtain, by receiving a system message, information such as basic information required for cell selection when a network is initially accessed, and an intra-frequency/inter-frequency/inter-RAT cell reselection parameter. The system information described in this application may be system information sent by an access network device in a cell in 4G or 5G, or may be system information sent by an access network device in a cell in a future mobile network, for example, system information sent by an access network device in a cell in a 6G or next-generation communication system. Specific content of the system information is not limited in this application.

For example, a 5G system is used as an example. In the 5G system, SI may be classified into two categories based on content: minimum system information (Minimum SI, MSI) and other system information (Other SI, OSI). The MSI includes a MIB and SIB1, which are used for providing UE with the basic information required for cell selection and scheduling information of another SIB when the network is initially accessed.

MIB: The MIB provides the UE with basic information such as whether a cell is barred from access and location information of SIB1.

SIB1 may also be referred to as RMSI (Remaining Minimum System Information, remaining minimum system message), and provides the UE with cell access-related information and the scheduling information of another SIB.

The OSI includes SIB2 to SIBn, which provide the UE with information about mobility, time, an earthquake and tsunami warning system (Earthquake and Tsunami Warning System, ETWS), and a commercial mobile alert system (Commercial Mobile Alert System, CMAS).

SIB2 provides the UE with common information required for intra-frequency cell reselection, inter-frequency cell reselection, and inter-RAT cell reselection.

SIB3 provides the UE with information related to intra-frequency reselection, including an intra-frequency cell reselection parameter and a blacklist of intra-frequency cells.

SIB4 provides the UE with information related to inter-frequency reselection, including an inter-frequency carrier reselection parameter, an inter-frequency cell reselection parameter, and a blacklist of inter-frequency cells.

SIB5 provides the UE with information related to inter-RAT evolved universal mobile telecommunications system (universal mobile telecommunications system, UMTS) terrestrial radio access (evolved universal terrestrial radio access, E-UTRA) reselection, including an inter-RAT frequency reselection parameter, an inter-RAT cell reselection parameter, and a blacklist of inter-RAT cells.

SIB8 provides the UE with CMAS (a warning system that the government or an authoritative organization broadcasts emergency information to the public in real time through a PLMN) warning information.

SIB9 provides the UE with time-related information, for example, provides high-precision time information, which is used for time synchronization on a UE side, including coordinated universal time (Coordinated Universal Time, UTC), a global positioning system (Global Positioning System, GPS), and local time.

The base station may periodically broadcast the MIB. In a scheduling periodicity (for example, 80 ms), the MIB may be repeatedly sent based on a configured synchronization signal/broadcast channel block (Synchronization Signal/PBCH Block, SSB) broadcast periodicity. If the SSB broadcast periodicity is configured to 160 ms, the MIB is repeatedly sent at 160 ms.

The base station periodically broadcasts SIB1, and in a scheduling periodicity (for example, 160 ms), SIB1 may be repeatedly sent based on a configured SIB1 broadcast periodicity.

The base station may periodically broadcast the OSI (not repeatedly send the OSI in a scheduling periodicity), or the UE may initiate a subscription request and then the base station broadcasts the OSI.

Standardization and industrialization of the 3rd Generation Partnership Program (the 3rd generation partnership project, 3GPP) are promoted based on a release (Release). A standardization periodicity of each release is approximately 15/18 months, including a plurality of features (Features). A feature may refer to a function or a capability of a terminal device or a network device, including but not limited to: an ultra reliable and low latency communications (ultra reliable and low latency communications, URLLC) feature, a non-terrestrial network (non-terrestrial network, NTN) feature, a vehicle to everything (vehicle to everything, V2X) feature, extended reality (extended reality, XR) feature, a small data transmission (small data transmission, SDT) feature, a multi-card transmission feature, a low power consumption feature, a flexible spectrum aggregation feature, a reduced capability (reduced capability, RedCap) feature, a non-terrestrial network (Non-terrestrial Network, NTN) feature, a multicast broadcast service (multicast broadcast service, MBS) feature, an internet of things (Internet of Things, IoT) feature, an ambient internet of things (ambient IoT, AIoT) feature, and the like.

For each feature, related information usually needs to be carried in system information, so that a terminal device supporting the feature can access a cell. However, as feature types increase, overheads of the system information also increase. Each terminal device receives system information including information related to various (all) features. Therefore, overheads for sending the system information by a network side increase, and overheads for receiving the system information by the terminal device also increase accordingly. In addition, the terminal device needs to support interpretation of all information (which increases implementation complexity of the terminal). This is an urgent problem to be resolved.

When the methods provided in this application are applied to the network architecture in FIG. 2, a method performed by the network device may also be performed by a module (for example, a chip) in the network device in FIG. 2, or may be performed by a control subsystem including a function of the network device. The control subsystem including the function of the network device may be a control center in the foregoing application scenarios such as smart grid, industrial control, intelligent transportation, and smart city. A method performed by the terminal device may also be performed by a module (for example, a chip or a modem) in the terminal device in FIG. 2, or may be performed by an apparatus including a function of the terminal device.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that: With evolution of the network architecture and the emergence of new service scenarios, the technical solutions provided in embodiments of this application are also applicable to similar technical problems.

It may be understood that a specific structure of an execution entity of the method provided in embodiments of this application is not particularly limited in this application, and may be applied to a module in a terminal device or a network device, provided that a program that records code of the method provided in embodiments of this application can be run to perform communication according to the method provided in embodiments of this application. The following uses interaction between the terminal device and the network device as an example for description.

In this application, the network side may send common system information, and all terminal devices camping on the current cell may receive the common system information. Therefore, for a system information design, the common system information may enable all terminal devices to have a same interpretation. Content of system information specific to different features may be isolated for different features, to implement decoupling of system information content of different features. A terminal device supporting a specific feature may receive only system information related to the feature, thereby reducing system information receiving overheads and improving efficiency.

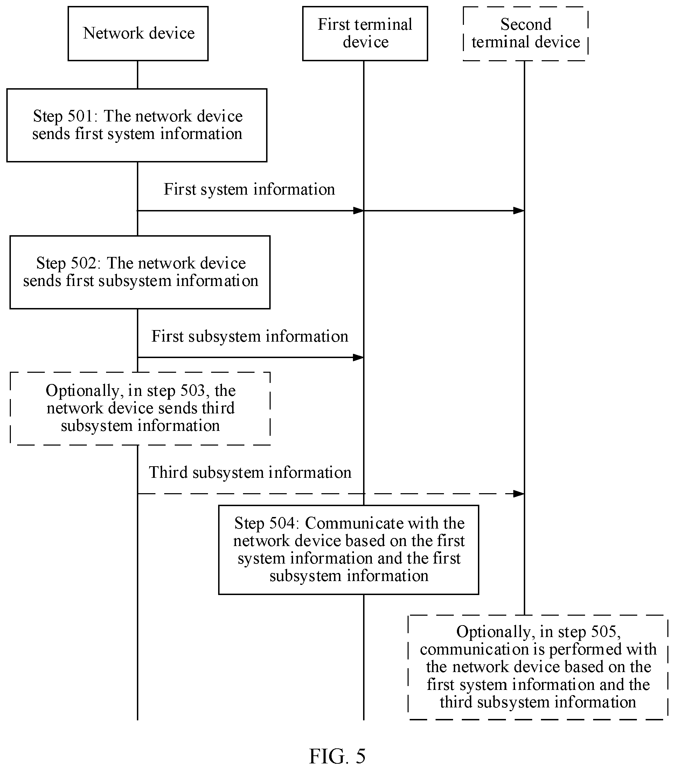

FIG. 5 is a schematic flowchart of a system information transmission method according to an embodiment of this application. The method includes the following steps.

Step 501: A network device sends first system information.

Correspondingly, a first terminal device receives the first system information from the network device.

Assuming that a second terminal device further exists, and the second terminal device may also receive the first system information.

The network device may periodically send the first system information, for example, periodically and repeatedly send the first system information at a periodicity of 160 ms. The periodicity of the first system information may be predefined or preconfigured, or may be determined by the network device. This is not limited in this application.

In this application, the system information may also be referred to as a name such as a system information block, and the subsystem information may also be referred to as a name such as a subsystem information block. For example, the first system information may be SIB1. With evolution of mobile communication technologies, a function and/or a name of SIB1 may change. In this case, the first system information may be SIB1 whose function and/or name changes.

In this application, how the network device sends the first system information is not limited. For example, the network device may broadcast the first system information in a cell. The network device may broadcast the first system information on a preset or predefined resource. This is not limited in this application.

In this application, the first system information indicates basic information required for communication. For example, the first system information indicates basic information required for communication between a terminal device and the network device. The basic information described herein is relative to first subsystem information associated with a first feature in the following. The first system information is common system information, and is system information that can be used or required by all terminal devices. In other words, regardless of a feature supported by the terminal device, the first system information can be used or required.

The first system information is further used for scheduling the first subsystem information, and the first subsystem information is related to the first feature. For example, the first subsystem information indicates information that is required for communication with the network device and that is related to the first feature. The first subsystem information is system information related to the first feature, and is system information used or required by only a terminal device supporting the first feature.

For example, the first system information indicates basic information required for initial access, and the first system information is applicable to all terminal devices; and the first subsystem information indicates basic information required for initial access of the terminal device supporting the first feature, and the first subsystem information is applicable to the terminal device supporting the first feature. During initial access, the terminal device supporting the first feature needs to use content of the first system information and the first subsystem information.

For example, the first system information includes at least one of the following: cell selection information; cell access-related information; connection establishment failure control; scheduling information, where the scheduling information is used for scheduling the first subsystem information, and the scheduling information may be referred to as SI-scheduling information (SI-SchedulingInfo) or the like; a serving cell common configuration; an internet protocol (internet protocol, IP) multimedia system (IP Multimedia Subsystem, IMS) urgent support flag; a UE timer and a constant; and unified access control (unified access control, UAC) restriction information. The content included in the first subsystem information is not limited. For example, if the first feature is an NTN, the first subsystem information includes at least one of the following: ephemeris information and a common timing advance (timing advance, TA) parameter. For example, if the first feature is a RedCap, the first subsystem information includes at least one of the following: an initial BWP configuration specific to the RedCap.

The first system information further indicates a correspondence between the first subsystem information and the first feature, so that the terminal device can determine that the first subsystem information is extension information of the system information related to the first feature. For example, the scheduling information in the first system information includes information about the first feature, for example, identification information of the first feature, which indicates that system information scheduled by using the scheduling information is related to the first feature. The identification information of the first feature is preset or preconfigured. For example, identification information of an IoT feature is 1, identification information of an AIoT is 2, and identification information of the RedCap is 3. Alternatively, the first system information further includes a bitmap, and one bit in the bitmap corresponds to one feature. When the first subsystem information is related to the first feature, a value of a bit related to the first feature in the bitmap is a first value, where for example, the first value is 1; or when the first subsystem information is not related to a second feature, a value of a bit related to the second feature in the bitmap is a second value, where for example, the second value is 0.

In this application, the scheduling information in the first system information may be further used for scheduling other system information. For example, the scheduling information is further used for scheduling second system information and at least one piece of second subsystem information. The second system information indicates other basic information required for communication, the second subsystem information is related to the first feature, and the second subsystem information and the first subsystem information include different information. For example, the second system information may be OSI other than SIB1, for example, SIB2 or SIB3. With the evolution of the mobile communication technologies, a function and/or a name of the OSI may change. In this case, the second system information may be OSI whose function and/or name changes.

In this application, system information other than the first system information, such as the second system information, third system information, and the first subsystem information, may be encapsulated into an SI message, and the SI message is sent in an SI window corresponding to the SI message. One SI message may include at least one piece of system information. For the scheduling information in the first system information, the scheduling information may indicate at least one of the following:
a list of SI messages, indicating one or more SI messages scheduled by using the scheduling information;
a periodicity of each SI message;
system information or subsystem information mapped to each SI message; and
an SI window length of each SI message.

The foregoing is merely an example. The scheduling information may further indicate other information, and examples are not described herein one by one.

In this application, the second system information may indicate other information other than the basic information required for initial access. For example, the second system information may indicate at least one of the following information:
common information required for intra-frequency cell reselection, inter-frequency cell reselection, and inter-RAT cell reselection;
information related to intra-frequency reselection, such as an intra-frequency cell reselection parameter and a blacklist of intra-frequency cells;
information related to inter-frequency reselection, including an inter-frequency carrier reselection parameter, an inter-frequency cell reselection parameter, and a blacklist of inter-frequency cells; and
information related to an inter-RAT E-UTRA reselection, such as an inter-RAT frequency reselection parameter, an inter-RAT cell reselection parameter, and a blacklist of inter-RAT cells.

In this application, the first system information and the second system information may be common system information (also referred to as basic system information) that needs to be received by all terminal devices. The first subsystem information and the second subsystem information are the system information related to the first feature, and only the terminal device supporting the first feature needs to receive the first subsystem information and the second subsystem information. Subsystem information such as the first subsystem information or the second subsystem information may also be referred to as supplementary system information, feature system information, auxiliary system information, extended system information, system information related to features, or the like. A name of the subsystem information is not limited in this application.

Herein, the first feature is only used as an example for description. In this application, for each feature, system information related to the feature may exist, and the system information related to each feature may be scheduled by using the first system information. For example, for the first system information, third subsystem information related to the second feature may further exist. For example, the third subsystem information indicates information that is required for communication with the network device and that is related to the second feature. A terminal device supporting the second feature communicates with the network device based on the first system information and the third subsystem information.

In this application, there may be the following implementations for an extension information element or an enhancement information element in the system information related to the features. Implementation 1: For an information element that is not included in the common system information, if a new information element needs to be introduced for a specific feature, the new information element may be set in the common system information, and only a terminal device that enables/runs/executes the feature may interpret/decode/understand system information related to the feature, and combine the system information with content included in the common system information, to obtain complete system information content.

For example, using the first feature as an example, the first system information does not include supplementary information related to the first feature, and the supplementary information related to the first feature is in the first subsystem information and is represented in a form of a new independent information element. For example, the first feature is SDT, and supplementary information related to the SDT feature may be represented in the first subsystem information as follows:

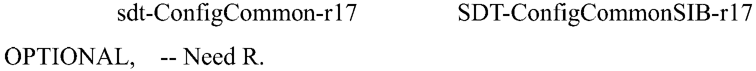

SDT-ConfigCommonSIB-r17 represents a name of a new field: an SDT common configuration SIB, and r17 represents a release number of a protocol into which the supplementary information is introduced, which may be understood as that a configuration of the feature is introduced into R17.

For another example, the first feature is a RedCap, and supplementary information related to the RedCap feature may be represented in the first subsystem information as follows:

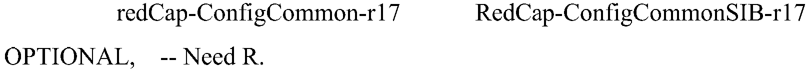

RedCap-ConfigCommonSIB-r17 represents a name of a new field: a RedCap common configuration SIB, and r17 represents a release number of a protocol into which the supplementary information is introduced, which may be understood as that a configuration of the feature is introduced from R17.

Implementation 2: A value or content of an existing information element of the common system information is extended. If a value or content of an information element in the common system information may be extended for a feature, for example, the first feature, the information element may be reserved in the common system information, and the value of the information element is set to a common value range or the content of the information element is common information. An extended value or extended content related to the first feature in the information element may be placed in subsystem information related to the first feature. In other words, an information element of the subsystem information related to the first feature includes a value or content that is additionally extended for the first feature, and a terminal device not supporting the first feature may not interpret the subsystem information related to the first feature.

For example, SI-SchedulingInfo in SIB1 needs to be extended to introduce content for the RedCap.

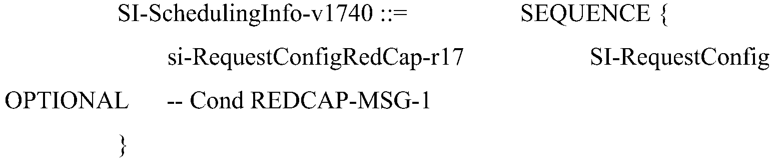

SIB1 is a common system message, and includes SI scheduling information (SI-SchedulingInfo). All terminal devices may receive corresponding information based on the SI scheduling information. Based on the SI scheduling information, SI scheduling information-v1740 (SI-SchedulingInfo-v1740) is added to system information related to the RedCap feature. The SI scheduling information-v1740 includes new content si-RequestConfigRedCap-r17 for the RedCap.

Step 502: The network device sends the first subsystem information.

Correspondingly, the first terminal device obtains the first subsystem information based on the first system information if it is determined that the first terminal device supports the first feature.

Specifically, the first terminal device receives the first subsystem information based on the scheduling information in the first system information if the first terminal device supports the first feature, and stores the first subsystem information. That the first terminal device supports the first feature may also be described as "the first terminal device has the first feature", "the first terminal device activates the first feature", "the first terminal device enables the first feature", or the like.

The first terminal device ignores the first subsystem information if it is determined that the first terminal device does not support the first feature. In this case, the first terminal device may receive the first subsystem information, but does not store the first subsystem information. Alternatively, the first terminal device does not interpret the first subsystem information if it is determined that the first terminal device does not support the first feature.

How the network device sends the first subsystem information is not limited in this application. For example, the network device may periodically send the first subsystem information, for example, periodically and repeatedly send the first subsystem information at a periodicity of 160 ms. For example, the scheduling information included in the first system information may indicate a periodicity of the first subsystem information.

Assuming that the second terminal device further exists, the second terminal device supports the second feature, the first system information is further used for scheduling the third subsystem information, and the third subsystem information indicates information that is required for communication with the network device and that is related to the second feature, step 503 may be further included.

Optionally, in step 503, the network device sends the third subsystem information.

Correspondingly, the second terminal device obtains the third subsystem information based on the first system information if it is determined that the second terminal device supports the second feature.

The second terminal device ignores the third subsystem information if it is determined that the second terminal device does not support the second feature. In this case, the second terminal device may receive the third subsystem information, but does not store the third subsystem information.

The third subsystem information may be scheduled by using the first system information. For example, the scheduling information included in the first system information is further used for scheduling the third subsystem information.

Step 504: The first terminal device communicates with the network device based on the first system information and the first subsystem information.

Optionally, in step 505, the second terminal device communicates with the network device based on the first system information and the third subsystem information.

For example, the first feature is the NTN. The first terminal device may determine, based on the first system information, basic information required for initially accessing the network device, such as cell selection information and cell access-related information. The first terminal device may determine ephemeris information and a common TA parameter based on the first subsystem information. Therefore, the first terminal device may perform uplink synchronization based on the ephemeris information and the common TA parameter, and initially access a cell of the network device based on information such as the cell selection information and the information related to cell access. A specific process is not described again.

According to the method provided in this application, the common system information (for example, the first system information) and the system information related to the first feature (for example, the first subsystem information) are separately sent. The common system information does not include the information related to the feature, the terminal device supporting the first feature receives and stores the first subsystem information, and the terminal device (for example, the second terminal device) not supporting the first feature may not store the first subsystem information. In this case, the terminal device supporting the first feature does not need to store system information related to another feature, thereby reducing overheads of the system information, and improving communication efficiency.

In this application, each piece of system information may be numbered. Specifically, there may be a plurality of implementations for configuring a number for each piece of system information. The following provides several possible implementations.

Implementation 1: The common system information is independently numbered from 1. For example, a number of the first system information is SIB1, a number of the second system information is SIB2, and a number of the third system information is SIB3, and so forth. A sub-number is configured for each feature. For example, a sub-number of the IoT feature is 0, a sub-number of the AIoT is 1, a sub-number of the RedCap is 2, and a sub-number of the SDT is 3. If one piece of subsystem information is extension information for one piece of common system information, a number of the subsystem information corresponds to a sub-number of a feature corresponding to the subsystem information and a number of the common system information.

For example, as shown in Table 1, an example in which the sub-number of the IoT feature is 0, the sub-number of the AIoT is 1, the sub-number of the RedCap is 2, and the sub-number of the SDT is 3 is used to show numbers respectively corresponding to system information and subsystem information.

**Table 1**

| System information name | System information number and content indicated by the system information | Subsystem information number related to the IoT feature | Subsystem information number related to the AIoT feature | Subsystem information number related to the RedCap feature | Subsystem information number related to the SDT feature |
|---|---|---|---|---|---|
| First system information | SIB1, indicating basic information required for initial access | SIB1-0 | SIB1-1 | SIB1-2 | SIB1-3 |
| Second system information | SIB2, indicating common information required for intra-frequency cell reselection, inter-frequency cell reselection, and inter-RAT cell reselection | SIB2-0 | SIB2-1 | SIB2-2 | SIB2-3 |
| Third system information | SIB3, indicating information related to intra-frequency reselection | SIB3-0 | SIB3-1 | SIB3-2 | SIB3-3 |
| Fourth system information | SIB4, indicating information related to inter-frequency reselection | SIB4-0 | SIB4-1 | SIB4-2 | SIB4-3 |
| Fifth system information | SIB5, indicating information related to inter-RAT E-UTRA reselection | SIB5-0 | SIB5-1 | SIB5-2 | SIB5-3 |

With reference to the foregoing descriptions, if there is subsystem information related to the IoT feature, and the subsystem information is extension information for the first system information, a number of the subsystem information is SIB1-0; if there is subsystem information related to the IoT feature, and the subsystem information is extension information for the second system information, a number of the subsystem information is SIB2-0; and if there is subsystem information related to the IoT feature, and the subsystem information is extension information for the third system information, a number of the subsystem information is SIB3-0.

Similarly, if there is subsystem information related to the AIoT feature, and the subsystem information is extension information for the first system information, a number of the subsystem information is SIB1-1; if there is subsystem information related to the AIoT feature, and the subsystem information is extension information for the second system information, a number of the subsystem information is SIB2-1; and if there is subsystem information related to the AIoT feature, and the subsystem information is extension information for the third system information, a number of the subsystem information is SIB3-1. Other cases may be deduced by analogy. Details are not described again.

Implementation 2: A sub-number of the common system information is 0, and sub-numbers of the subsystem information for respective features start from 1. For example, a number of the first system information is SIB1-0, a number of the second system information is SIB2-0, and a number of the third system information is SIB3-0, and so forth. A sub-number is configured for each feature. For example, a sub-number of the IoT feature is 1, a sub-number of the AIoT is 2, a sub-number of the RedCap is 3, and a sub-number of the SDT is 4.

For example, as shown in Table 2, an example in which the sub-number of the IoT feature is 1, the sub-number of the AIoT is 2, the sub-number of the RedCap is 3, and the sub-number of the SDT is 4 is used to show numbers respectively corresponding to system information and subsystem information.

**Table 2**

| System information name | System information number and content indicated by the system information | Subsystem information number related to the IoT feature | Subsystem information number related to the AIoT feature | Subsystem information number related to the RedCap feature | Subsystem information number related to the SDT feature |
|---|---|---|---|---|---|
| First system information | SIB1-0, indicating basic information required for initial access | SIB1-1 | SIB1-2 | SIB1-3 | SIB1-4 |
| Second system information | SIB2-0, indicating common information required for intra-frequency cell reselection, inter-frequency cell reselection, and inter-RAT cell reselection | SIB2-1 | SIB2-2 | SIB2-3 | SIB2-4 |
| Third system information | SIB3-0, indicating information related to intra-frequency reselection | SIB3-1 | SIB3-2 | SIB3-3 | SIB3-4 |
| Fourth system information | SIB4-0, indicating information related to inter-frequency reselection | SIB4-1 | SIB4-2 | SIB4-3 | SIB4-4 |
| Fifth system information | SIB5-0, indicating information related to inter-RAT E-UTRA reselection | SIB5-1 | SIB5-2 | SIB5-3 | SIB5-4 |

Implementation 3: The common system information and the subsystem information are both independently numbered.

For example, as shown in Table 3, a number corresponding to the system information and a number corresponding to the subsystem information are shown.

**Table 3**

| System information name | System information number and content indicated by the system information | Subsystem information number related to the IoT feature | Subsystem information number related to the AIoT feature | Subsystem information number related to the RedCap feature | Subsystem information number related to the SDT feature |
|---|---|---|---|---|---|
| First system information | SIB1, indicating basic information required for initial access | SIB20 | SIB21 | SIB22 | SIB23 |
| Second system information | SIB2, indicating common information required for intra-frequency cell reselection, inter-frequency cell reselection, and inter-RAT cell reselection | SIB24 | SIB25 | SIB26 | SIB27 |
| Third system information | SIB3, indicating information related to intra-frequency reselection | SIB28 | SIB29 | SIB30 | SIB31 |
| Fourth system information | SIB4, indicating information related to inter-frequency reselection | SIB32 | SIB33 | SIB34 | SIB35 |
| Fifth system information | SIB5, indicating information related to inter-RAT E-UTRA reselection | SIB36 | SIB37 | SIB38 | SIB39 |

Implementation 4: Subsystem information corresponding to each piece of common system information has a same number.

For example, as shown in Table 4, a number corresponding to the system information and a number corresponding to the subsystem information are shown.

**Table 4**

| System information name | System information number and content indicated by the system information | Subsystem information number related to the IoT feature | Subsystem information number related to the AIoT feature | Subsystem information number related to the RedCap feature | Subsystem information number related to the SDT feature |
|---|---|---|---|---|---|
| First system information | SIB1, indicating basic information required for initial access | SIB20 | SIB20 | SIB20 | SIB20 |
| Second system information | SIB2, indicating common information required for intra-frequency cell reselection, inter-frequency cell reselection, and inter-RAT cell reselection | SIB21 | SIB21 | SIB21 | SIB21 |
| Third system information | SIB3, indicating information related to intra-frequency reselection | SIB22 | SIB22 | SIB22 | SIB23 |
| Fourth system information | SIB4, indicating information related to inter-frequency reselection | SIB24 | SIB24 | SIB24 | SIB24 |
| Fifth system information | SIB5, indicating information related to inter-RAT E-UTRA reselection | SIB25 | SIB25 | SIB25 | SIB25 |

In this implementation, the scheduling information in the first system information may indicate a feature corresponding to the subsystem information scheduled by using the scheduling information. For example, the scheduling information includes an identifier of the feature corresponding to the subsystem information. In this case, the terminal device may determine, based on the identifier of the feature, the feature corresponding to the subsystem information scheduled by using the scheduling information. In addition, in this implementation, a plurality of pieces of subsystem information correspond to one number, so that overheads of the system information number can be reduced.

In this application, system information other than the first system information, such as the second system information, third system information, and the first subsystem information, may be encapsulated into an SI message, and the SI message is sent in an SI window corresponding to the SI message. One SI message may include at least one piece of system information.

In this application, different system information may be mapped to one SI message according to the following mapping rule.

Only system information with a same periodicity can be mapped to a same SI message.

Only system information with a same sending policy (continuous broadcast or subscription) can be mapped to a same SI message.

The common system information and the subsystem information are mapped to different SI messages. For example, the second system information and a second subsystem are mapped to different SI messages. Alternatively, subsystem information corresponding to different features is mapped to different SI messages.

It may also be understood that only system information of a same type (common or feature-related) can be mapped to a same SI message, or only system information corresponding to a same feature can be mapped to a same SI message.

In an implementation, if system information mapped to an SI message includes common system information, the SI message may also be referred to as a common SI message; or if system information mapped to an SI message includes system information related to a feature, the SI message may also be referred to as an SI message related to the feature.

In this application, one SI message is associated with one SI window. In the SI window, only this SI message can be sent and may be repeatedly sent for a plurality of times, but another SI message cannot be sent. SI window lengths of all SI messages are the same. The SI window lengths are preset or preconfigured, or may be indicated by the network device. Periodicities of different SI messages are independent of each other. Each SI message is transmitted in only one SI window.

How to determine a location of an SI window associated with each SI message is not limited in this application. The following provides several possible implementations.

First implementation: For the common system information, for example, the second system information, start symbol a of a first SI window associated with the first SI message including the second system information satisfies: $a = x mod N ;$ and
a system frame number (system frame number, SFN) SFN of a radio frame in which the first SI window associated with the first SI message is located satisfies: $SFN mod T = FLOOR \left(x/N\right) ,$ where
x=(n-1)×w, n is determined based on a position of the first SI message in a list of system information messages (list of SI messages) included in the first system information, T is a periodicity of the first SI message, T may be in a unit of a radio frame, N is a quantity of symbols included in one radio frame, w is a length of the first SI window associated with the first SI message, mod represents a modulo operation, and FLOOR() represents a rounding-down operation. The symbol may be a symbol such as an orthogonal frequency division multiplexing (orthogonal frequency division multiplexing, OFDM) symbol. The list of system information messages included in the first system information may indicate information such as at least one SI message, system information or subsystem information included in each of the at least one SI message, and a periodicity of each SI message.

For system information related to a feature, for example, the second subsystem information, start symbol a of a second SI window associated with a second SI message including the second subsystem information satisfies: $a = x mod N ;$ and
an SFN of a radio frame in which the second SI window associated with the second SI message is located satisfies: $SFN mod T = FLOOR \left(x/N\right) ,$ where
x=(n*α-1)×w, x=(n-1)×w+L_{off1}, or x=(n-1+L_{off1})×w, α is a number greater than 1, and L_{off1} is an integer greater than 0. α or L_{off1} corresponding to each feature is a preset or preconfigured value or a value configured by the network device. Values of α or L_{off1} corresponding to different features may be the same or may be different. For example, α corresponding to the first feature is equal to 1, and α corresponding to the second feature is equal to 2. A value of L_{off1} may alternatively be determined based on a quantity of SI messages that are in the list of system information messages and that include the common system information. In this case, the second SI window associated with the second SI message may be arranged after all SI messages that include the common system information.

With reference to the foregoing description, for example, the list of system information messages in the first system information may include a scheduling information list (schedulingInfoList), and content of schedulingInfoList may be shown as follows.

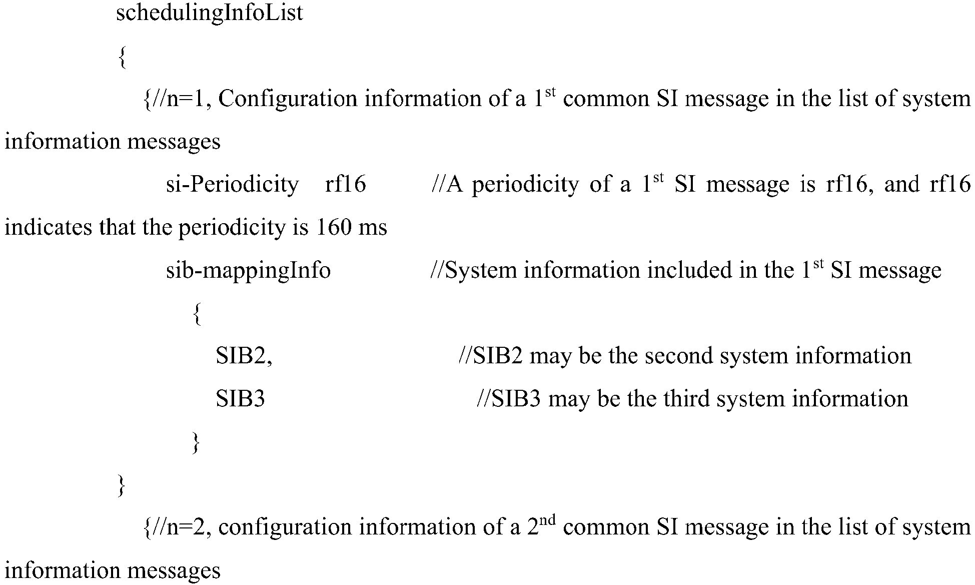

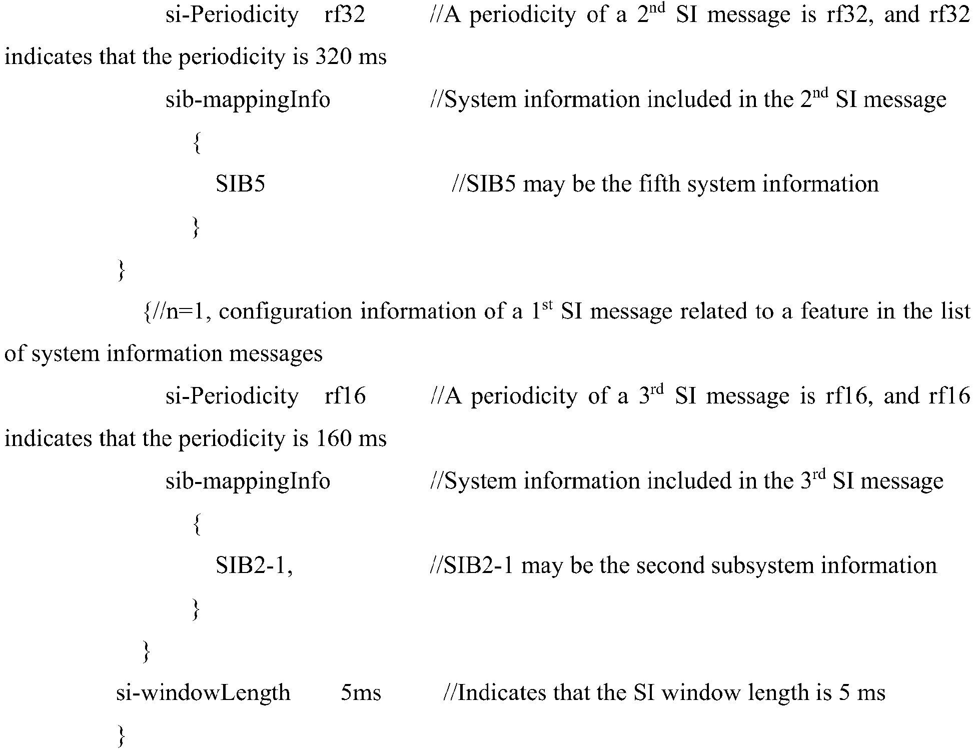

According to the foregoing descriptions, assuming that L_{off1}=80, a length of one radio frame is 10 ms, one radio frame includes N=10 symbols, the 1^{st} SI message is represented by SI-1, the 2^{nd} SI message is represented by SI-2, and the 3^{rd} SI message is represented by SI-3, a periodicity and an SI window of each SI message may be shown in Table 5.

**Table 5**

| SI message | SI-1 | SI-2 | SI-3 |
|---|---|---|---|
| Window length | 5 ms | 5 ms | 5 ms |
| x | x=(1-1)*5=0 | x=(2-1)*5=5 | x=(1-1)*5+80=80 |
| Periodicity | T=16 | T=32 | T=16 |
| SFN | SFN mod 16= FLOOR(0/10)=0 (SFN: 0, 16, 32, ...) | SFN mod 32= FLOOR(5/10)=0 (SFN: 0, 32, 64, ...) | SFN mod 16= FLOOR(80/10)=8 (SFN: 8, 24, 40, ...) |
| Start symbol | a=0 mod 10=0 | a=5 mod 10=5 | a=80 mod 10=0 |

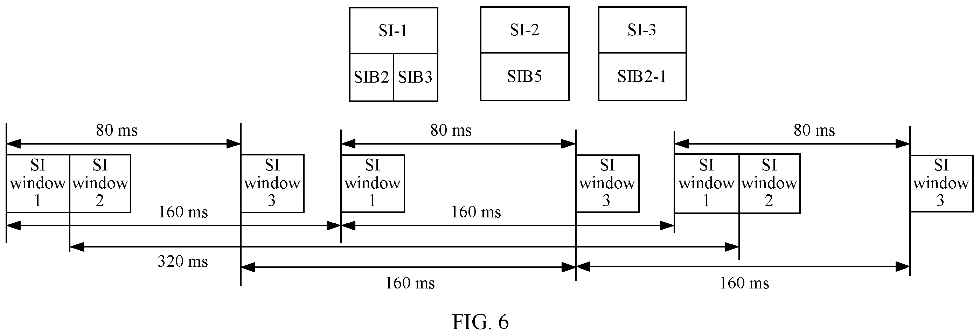

With reference to Table 5, as shown in FIG. 6, an SI window 1 associated with the SI-1 message is adjacent to an SI window 2 associated with the SI-2 message, but an SI window 3 associated with the SI-3 message is not contiguous with another SI window. For example, a start location of the SI window 3 is 80 ms away from a start location of the SI window 1. In other words, for SI messages with a periodicity of 16, SI windows in SFN0 to SFN7 are used for common SI messages, and SI windows in SFN8 to SFN15 are used for SI messages related to features.

Second implementation: For the common system information, for example, the second system information, and start symbol a and an SFN that are of the first SI window associated with the first SI message including the second system information, both refer to the descriptions in the first implementation.

For extended system information, for example, the second subsystem information, start symbol a of a second SI window associated with a second SI message including the second subsystem information satisfies: $a = x mod N ;$ and
an SFN of a radio frame in which the second SI window associated with the second SI message is located satisfies: $SFN mod T = FLOOR \left(x/N\right) + {L}_{off 2} ,$ where
x=(n-1)×w, L_{off2} is an integer greater than 0, L_{off2} is a preset or preconfigured value or a value configured by the network device, and values of L_{off2} corresponding to different features may be the same or may be different.

For example, with reference to the example of schedulingInfoList, assuming that L_{off2}=8, a length of one radio frame is 10 ms, one radio frame includes N=10 symbols, the 1^{st} SI message is represented by SI-1, the 2^{nd} SI message is represented by SI-2, and the 3^{rd} SI message is represented by SI-3, a periodicity and an SI window of each SI message may be shown in Table 6.

**Table 6**

| SI message | SI-1 | SI-2 | SI-3 |
|---|---|---|---|
| Window length | 5 ms | 5 ms | 5 ms |
| x | x=(1-1)*5=0 | x=(2-1)*5=5 | x=(1-1)*5=0 |
| Periodicity | T=16 | T=32 | T=16 |
| SFN | SFN mod 16= FLOOR(0/10)=0 (SFN: 0, 16, 32, ...) | SFN mod 32= FLOOR(5/10)=0 (SFN: 0, 32, 64, ...) | SFN mod 16= FLOOR(0/10)+8=8 (SFN: 8, 24, 40, ...) |
| Start symbol | a=0 mod 10=0 | a=5 mod 10=5 | a=0 mod 10=0 |

With reference to Table 6, an SI window 1 associated with the SI-1 message is adjacent to an SI window 2 associated with the SI-2 message, but an SI window 3 associated with the SI-3 message is not contiguous with another SI window. For example, a start location of the SI window 3 is 80 ms away from a start location of the SI window 1.

According to the foregoing method, the SI window of the common SI message and the SI window of the SI message related to the feature are set in different regions, and are not set to be adjacent to each other. In this way, complexity of receiving the system information by the terminal device can be reduced, and efficiency of receiving the system information can be improved.

In this application, if the system information sent by the network device changes, the network device may also indicate, to the terminal device, system information that changes, and the terminal device needs to update the changed system information. There may be a plurality of implementations of how the network device indicates a change in the system information.

Implementation 1: The first system information may include a value tag (valueTag) corresponding to each feature, and the value tag corresponding to each feature indicates whether system information corresponding to the feature is updated (or whether the system information corresponding to the feature changes). Each time the system information corresponding to the feature is updated, a value of the value tag corresponding to the feature changes, for example, the value of the value tag is increased by 1. When the system information corresponding to the feature is not updated, the value of the value tag corresponding to the feature remains unchanged. The terminal device may determine, based on the value tag corresponding to each feature, whether the system information corresponding to each feature is updated, so that control is more accurate.

For example, if the first subsystem information is updated, the value of the value tag corresponding to the first feature in the first system information is increased by 1. When the terminal device determines that the value tag corresponding to the first feature changes, it is determined that the system information corresponding to the first feature is updated. For example, it is determined that the first subsystem information is updated.

Implementation 2: When the system information related to the feature is updated, first update indication information is added to downlink control information (downlink control information, DCI) used for scheduling a paging (paging) message. The first update indication information indicates that the system information related to the feature is updated.

In this implementation, if a terminal device receives only the common system information, the terminal device may ignore, based on the first update indication information, the system information related to the feature, or may not read the system information related to the feature. In this way, power consumption of the terminal device is reduced.

For example, when the first subsystem information is updated, the network device may send DCI, where the DCI is scrambled by using a paging radio network temporary identity (paging radio network temporary identity, P-RNTI), and the DCI includes the first update indication information. When receiving the DCI, and determining that the DCI includes the first update indication information, the terminal device may determine that the system information related to the feature is updated, to receive updated system information.

Alternatively, the first update indication information may be in a short message (short message) field of the DCI, or may be in another field of the DCI. This is not limited in this application.

For example, the first update indication information included in the DCI or the short message field of the DCI is systemInfoModification-extend. When a value of systemInfoModification-extend is 1, it indicates that the system information related to the feature is updated; or when a value of systemInfoModification-extend is 0, it indicates that the system information related to the feature is not updated.

Implementation 3: When the system information related to the feature is updated, the first update indication information is added to a paging (paging) message. The first update indication information indicates that the system information related to the feature is updated.

In this implementation, if a terminal device receives only the common system information, the terminal device may ignore, based on the first update indication information, the system information related to the feature, or may not read the system information related to the feature. In this way, power consumption of the terminal device is reduced.

Implementation 4: Each feature corresponds to one piece of update indication information. When system information corresponding to the feature is updated, the network device sends update indication information corresponding to the feature, where the update indication information indicates that system information related to the feature is updated. Correspondingly, the terminal device may receive updated system information of each feature based on the update indication information corresponding to each feature.

In this implementation, because each feature corresponds to one piece of update indication information, when system information related to one feature is updated, only a terminal device supporting the feature receives updated system information, and another terminal device may ignore the system information related to the feature or not read the system information related to the feature. In this way, power consumption of the terminal device is reduced.

For example, second update indication information indicates that the system information related to the first feature is updated. When the system information corresponding to the first feature is updated, the network device sends the second update indication information. If the terminal device receives the second update indication information, the terminal device receives updated system information of the first feature.

The network device may include, by using the DCI or the short message field or the paging message in the DCI, the update indication information corresponding to each feature.

For example, update indication information corresponding to the RedCap is represented as systemInfoModification-redcap. When a value of systemInfoModification-redcap is 1, it indicates that system information related to the RedCap feature is updated. When the system information related to the RedCap feature is updated, the DCI or the short message field in the DCI sent by the network device may include systemInfoModification-redcap, and the value of systemInfoModification-redcap is 1.

For example, the update indication information corresponding to the RedCap may be identification information corresponding to the RedCap. When the system information related to the RedCap feature is updated, the paging message sent by the network device may include the identification information corresponding to the RedCap.

For example, the paging message includes a bitmap, and one bit in the bitmap corresponds to one feature. When the system information related to the RedCap feature is updated, a value of a bit related to the first feature in the bitmap is a first value. For example, the first value is 1.

Implementation 5: Each feature corresponds to one paging message. When system information corresponding to the feature is updated, the network device sends a paging message corresponding to the feature, where the paging message indicates that system information related to the feature is updated. Correspondingly, the terminal device may receive updated system information of each feature based on the paging message corresponding to each feature.

The paging message corresponding to each feature is scrambled by using a P-RNTI corresponding to the feature, or a paging occasion of the paging message corresponding to each feature is determined based on identification information of the feature.

Using the first feature as an example, if the system information related to the first feature is updated, for example, the first subsystem information is updated, the network device generates a paging message corresponding to the first feature, where the paging message indicates that the system information related to the first feature is updated, and the paging message is scrambled by using a P-RNTI corresponding to the first feature, or a paging occasion (paging occasion, PO) of the paging message is determined based on the identification information of the first feature.

If the paging message corresponding to the first feature is scrambled by using the P-RNTI corresponding to the first feature, when receiving the paging message scrambled by using the P-RNTI corresponding to the first feature, the terminal device may determine that the system information related to the first feature is updated, to receive updated system information related to the first feature. In this case, the terminal device supporting the first feature does not need to receive all paging messages, but only needs to receive the paging message scrambled by using the P-RNTI corresponding to the first feature. In this way, a quantity of received paging messages is reduced, and power consumption of the terminal device is reduced.

If the paging occasion of the paging message corresponding to each feature is determined based on the identification information of the feature, an SFN of the paging occasion, that is, an SFN of a paging frame (paging frame, PF) including the PO, may satisfy: $\left(SFN+PF_offset\right) mod Tp = \left(Tp div Np\right) * \left(UE_ID mod Np\right) mod f_N .$

Tp is the smallest value among a RAN paging periodicity, a specific paging periodicity of the terminal device, and a default paging periodicity. div represents an integer division operation, and f_N represents the identification information of the feature (where a specific name is not limited).

PF_offset is an offset used for determining the PF, for example, may be carried in SIB1 or the first system information, and Np is a total quantity of PFs included in a paging time window (paging time window, PTW) of the paging message.

UE_ID is determined based on an identifier of the terminal device. For example, the identifier of the terminal device is an international mobile subscriber identity (international mobile subscriber identity, IMSI), UE_ID may be equal to IMSI mod 1024, and mod represents a modulo operation. For example, the identifier of the terminal device is a fifth generation system temporary mobile subscriber identifier (5G S-temporary mobile subscription Identifier, 5G S-TMSI), and UE_ID may be equal to 5G S-TMSI mod 1024.

The PO is indicated by an index i_s, where i_s satisfies: $i_s = floor \left(UE_ID/Np\right) mod Ns .$

Ns represents a quantity of POs included in one PF.

If the paging occasion of the paging message corresponding to each feature is determined based on the identification information of the feature, for the terminal device supporting the first feature, the terminal device does not need to monitor paging messages on all possible POs, and only needs to monitor paging messages on POs determined based on the identification information of the first feature. In this way, a quantity of paging messages that need to be monitored is reduced, and power consumption of the terminal device is reduced.

It may be understood that, to implement functions in the foregoing embodiments, the terminal device or the network device includes corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

The following are diagrams of possible structures of communication apparatuses according to embodiments of this application. The communication apparatuses may be configured to implement functions of the terminal device or the network device in the foregoing method embodiments. Therefore, beneficial effects of the foregoing method embodiments can also be implemented.

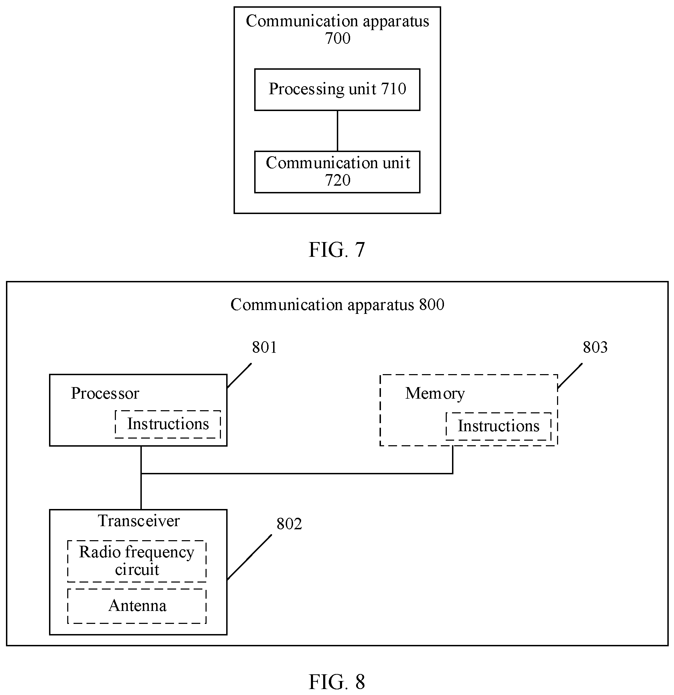

As shown in FIG. 7, a communication apparatus 700 includes a processing unit 710 and a communication unit 720. The communication apparatus 700 is configured to implement a function of the terminal device or the network device in various method embodiments shown above.

When the communication apparatus 700 is configured to implement the function of the terminal device,
the communication unit is configured to receive first system information from a network device, where the first system information indicates basic information required for communication, the first system information is further used for scheduling first subsystem information, and the first subsystem information is related to a first feature;
the processing unit is configured to obtain the first subsystem information based on the first system information if it is determined that the first feature is supported; and
the communication unit is configured to communicate with the network device based on the first system information and the first subsystem information.

When the communication apparatus 700 is configured to implement the function of the network device,
the processing unit is configured to send first system information by using the communication unit, where the first system information indicates basic information required for communication, the first system information is further used for scheduling first subsystem information, and the first subsystem information is information related to a first feature; and
the communication unit is configured to send the first subsystem information.

For more detailed descriptions about the processing unit 710 and the communication unit 720, directly refer to related descriptions in the foregoing method embodiments. Details are not described herein again.

It should be understood that division of the units in the foregoing apparatus is merely logical function division. During actual implementation, all or some of the units may be integrated into one physical entity, or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. In addition, all or some of the units may be integrated together, or may be implemented independently. The processing element herein may be a processor, or may be an integrated circuit having a signal processing capability. In an implementation process, operations in the foregoing methods or the foregoing units may be implemented by using a hardware integrated logic circuit in the processor element or may be implemented in a form in which the processing element invokes software.

In an example, a unit in any one of the foregoing apparatuses may be one or more integrated circuits configured to implement the foregoing methods, for example, one or more application-specific integrated circuits (application-specific integrated circuit, ASIC), one or more microprocessors (digital signal processor, DSP), one or more field programmable gate arrays (field programmable gate array, FPGA), or a combination of at least two of these forms of integrated circuits. For another example, when the units in the apparatus may be implemented in a form in which a processing element schedules a program, the processing element may be a processor, for example, a general-purpose central processing unit (central processing unit, CPU) or another processor that can invoke the program. For still another example, the units may be integrated and implemented in a form of a system-on-a-chip (system-on-a-chip, SoC).

The foregoing unit for receiving is an interface circuit of the apparatus, and is configured to receive a signal from another apparatus. For example, when the apparatus is implemented in a manner of a chip, the receiving unit is an interface circuit that is of the chip and that is configured to receive a signal from another chip or apparatus. The foregoing unit for sending is an interface circuit of the apparatus, and is configured to send a signal to another apparatus. For example, when the apparatus is implemented in the manner of the chip, the sending unit is an interface circuit that is of the chip and that is configured to send a signal to another chip or apparatus.

In another possible product form, the terminal device or the network device in embodiments of this application may be implemented by using a general bus architecture. For ease of description, FIG. 8 is a diagram of a structure of a communication apparatus 800 according to an embodiment of this application. The communication apparatus 800 includes a processor 801 and a transceiver 802. The communication apparatus 800 may be a terminal device, or a chip or a chip system in the terminal device. Alternatively, the communication apparatus 800 may be a network device, or a chip or a module in the network device. FIG. 8 shows only main components of the communication apparatus 800. In addition to the processor 801 and the transceiver 802, the communication apparatus 800 may further include a memory 803 and an input/output apparatus (not shown in the figure).

Optionally, the processor 801 is mainly configured to process a communication protocol and communication data, control the entire communication apparatus, execute a software program, and process data of the software program. The memory 803 is mainly configured to store the software program and the data. The transceiver 802 may include a radio frequency circuit and an antenna. The radio frequency circuit is mainly configured to: perform conversion between a baseband signal and a radio frequency signal, and process the radio frequency signal. The antenna is mainly configured to send and receive a radio frequency signal in a form of an electromagnetic wave. The input/output apparatus, such as a touchscreen, a display, or a keyboard, is mainly configured to: receive data input by a user and output data to the user.

Optionally, the processor 801, the transceiver 802, and the memory 803 may be connected through a communication bus.

After the communication apparatus is powered on, the processor 801 may read the software program in the memory 803, interpret and execute instructions of the software program, and process the data of the software program. When data needs to be sent in a wireless manner, the processor 801 performs baseband processing on to-be-sent data, and then outputs a baseband signal to the radio frequency circuit. The radio frequency circuit performs radio frequency processing on the baseband signal, and then sends a radio frequency signal in an electromagnetic wave form through the antenna. When data is sent to the communication apparatus, the radio frequency circuit receives the radio frequency signal through the antenna, converts the radio frequency signal into a baseband signal, and outputs the baseband signal to the processor 801. The processor 801 converts the baseband signal into data and processes the data.

In another implementation, the radio frequency circuit and the antenna may be disposed independently of the processor for baseband processing. For example, in a distributed scenario, the radio frequency circuit and the antenna may be remotely disposed independently of the communication apparatus.

In some embodiments, in terms of hardware implementation, a person skilled in the art may figure out that the communication apparatus 700 may be in a form of the communication apparatus 800 shown in FIG. 8.

In an example, functions/implementation processes of the processing unit 710 in FIG. 7 may be implemented by the processor 801 in the communication apparatus 800 shown in FIG. 8 by invoking computer-executable instructions stored in the memory 803. Functions/implementation processes of the communication unit 720 in FIG. 7 may be implemented by the transceiver 802 in the communication apparatus 800 shown in FIG. 8.

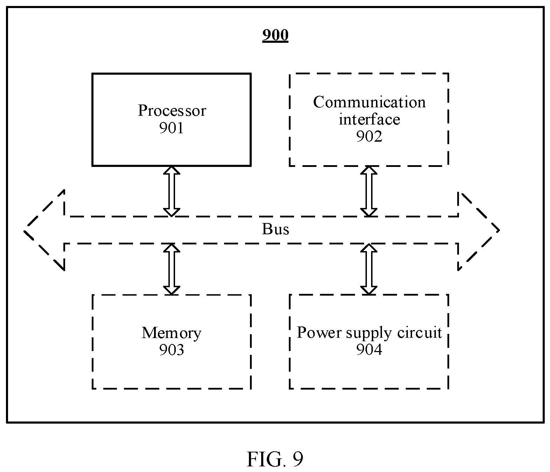

In still another possible product form, the terminal device or the network device in this application may use a composition structure shown in FIG. 9, or include components shown in FIG. 9. FIG. 9 is a diagram of composition of a communication apparatus 900 according to this application.

As shown in FIG. 9, the communication apparatus 900 includes at least one processor 901. Optionally, the communication apparatus further includes a communication interface 902.

When related program instructions are executed in the at least one processor 901, the communication apparatus 900 may be enabled to implement the method provided in any one of the foregoing embodiments and any possible design of the method. Alternatively, the processor 901 is configured to implement, by using a logic circuit or executing code instructions, the method provided in any one of the foregoing embodiments and the possible designs of the foregoing embodiments.

The communication interface 902 may be configured to receive program instructions and transmit the program instructions to the processor. Alternatively, the communication interface 902 may be configured to perform communication interaction between the communication apparatus 900 and another communication device, for example, exchange control signaling and/or service data. For example, the communication interface 902 may be configured to receive a signal from an apparatus other than the communication apparatus 900, and transmit the signal to the processor 901, or send a signal from the processor 901 to a communication apparatus other than the communication apparatus 900.

Optionally, the communication interface 902 may be a code and/or data read/write interface circuit, or the communication interface 902 may be a signal transmission interface circuit between a communication processor and a transceiver machine, or may be a pin of a chip.

Optionally, the communication apparatus 900 may further include at least one memory 903, and the memory 903 may be configured to store the related program instructions and/or data required. It should be noted that the memory 903 may exist independently of the processor 901, or may be integrated with the processor 901. The memory 903 may be located inside the communication apparatus 900, or may be located outside the communication apparatus 900. This is not limited.

Optionally, the communication apparatus 900 may further include a power supply circuit 904, and the power supply circuit 904 may be configured to supply power to the processor 901. The power supply circuit 904 may be located in a same chip as the processor 901, or may be located in a chip other than a chip in which the processor 901 is located.

Optionally, the communication apparatus 900 may further include a bus, and parts of the communication apparatus 900 may be interconnected through the bus.

In some embodiments, in hardware implementation, a person skilled in the art may figure out that the foregoing communication apparatus 700 shown in FIG. 7 may be in a form of the communication apparatus 900 shown in FIG. 9.

In an example, functions/implementation processes of the processing unit 710 in FIG. 7 may be implemented by the processor 901 in the communication apparatus 900 shown in FIG. 9 by invoking computer-executable instructions stored in the memory 903. Functions/implementation processes of the communication unit 720 in FIG. 7 may be implemented by the communication interface 902 in the communication apparatus 900 shown in FIG. 9.

It should be noted that the structure shown in FIG. 9 does not constitute a specific limitation on the terminal device or the network device. For example, in some other embodiments of this application, the terminal device or the network device may include more or fewer components than those shown in the figure, or combine some components, or split some components, or have different component arrangements. The components shown in the figure may be implemented by hardware, software, or a combination of software and hardware.

When the communication apparatus is a chip used in a terminal, the chip in the terminal implements functions of the terminal in the foregoing method embodiments. The chip in the terminal receives information from another module (for example, a radio frequency module or an antenna) in the terminal, where the information is sent by a base station to the terminal. Alternatively, the chip in the terminal sends information to another module (for example, a radio frequency module or an antenna) in the terminal, where the information is sent by the terminal to a base station.

When the foregoing communication apparatus is a module used in a base station, the base station module implements a function of the base station in the foregoing method embodiment. The module in the base station receives information from another module (for example, a radio frequency module or an antenna) in the base station, where the information is sent by a terminal to the base station; or the module in the base station sends information to another module (for example, a radio frequency module or an antenna) in the base station, where the information is sent by the base station to a terminal. The base station module herein may be a baseband chip of the base station, or may be a CU, a DU, or another module. The DU herein may be an open DU (open DU, O-DU) in an open radio access network (open radio access network, O-RAN) architecture. The CU herein may be an open CU (open CU, O-CU) in the O-RAN architecture.

It can be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor or the like.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a base station or a terminal device. Certainly, the processor and the storage medium may alternatively exist in a base station or a terminal device as discrete components.

All or some of the foregoing embodiments may be implemented by using software, hardware, firmware, or any combination thereof. When software is used to implement embodiments, all or a part of the embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk drive, or a magnetic tape; may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined into a new embodiment based on an internal logical relationship thereof.

A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

It is clear that a person skilled in the art can make various modifications and variations to this application without departing from the scope of this application. In this way, this application is intended to cover these modifications and variations of this application provided that they fall within the scope of the claims of this application and their equivalent technologies.

## Claims

1. A system information transmission method, comprising:
receiving first system information from a network device, wherein the first system information indicates basic information required for communication, the first system information is further used for scheduling first subsystem information, and the first subsystem information is related to a first feature;
obtaining the first subsystem information based on the first system information if it is determined that the first feature is supported; and
communicating with the network device based on the first system information and the first subsystem information.

2. The method according to claim 1, wherein the first subsystem information is ignored if it is determined that the first feature is not supported.

3. The method according to claim 1 or 2, wherein the method further comprises:
receiving second system information and second subsystem information, wherein the second system information indicates other basic information required for communication, the second subsystem information is related to the first feature, and the second subsystem information and the first subsystem information comprise different information.

4. The method according to claim 3, wherein the first subsystem information indicates dedicated information required for a terminal device supporting the first feature to access a network; and the second subsystem information indicates at least one of the following:
dedicated information required for the terminal device supporting the first feature to perform intra-frequency cell reselection, inter-frequency cell reselection, and inter-RAT cell reselection;
a dedicated intra-frequency cell reselection parameter and a dedicated blacklist of intra-frequency cells required for the terminal device supporting the first feature to perform intra-frequency cell reselection;
a dedicated inter-frequency carrier reselection parameter, a dedicated inter-frequency cell reselection parameter, and a dedicated blacklist of inter-frequency cells required for the terminal device supporting the first feature to perform inter-frequency cell reselection; and
dedicated relevant information for the terminal device supporting the first feature to perform system universal mobile telecommunications system terrestrial radio access E-UTRA reselection.

5. The method according to claim 3, wherein the first system information further indicates a correspondence between the first subsystem information and the first feature.

6. The method according to any one of claims 3 to 5, wherein the second system information and the second subsystem information are carried in different system information messages.

7. The method according to any one of claims 3 to 6, wherein the second subsystem information is carried in a system information message, and start symbol a of a system information window associated with the system information message satisfies: $a = x mod N ;$ and
a system frame number SFN of a radio frame in which the system information window associated with the system information message is located satisfies: $SFN mod T = FLOOR \left(x/N\right) ,$ wherein
x=(n*α-1)×w, or x=(n-1)×w+L_{off1}, α is a number greater than 1, L_{off1} is an integer greater than 0, n is determined based on a position of the system information message in a list of system information messages comprised in the first system information, T is a periodicity of the system information message, N is a quantity of symbols comprised in one radio frame, w is a length of the system information window associated with the system information message, mod represents a modulo operation, and FLOOR() represents a rounding-down operation.

8. The method according to any one of claims 3 to 6, wherein the second subsystem information is carried in a system information message, and start symbol a of a system information window associated with the system information message satisfies: $a = x mod N ;$ and
a system frame number SFN of a radio frame in which the system information window associated with the system information message is located satisfies: $SFN mod T = FLOOR \left(x/N\right) + {L}_{off 2} ,$ wherein
x=(n-1)×w, L_{off2} is an integer greater than 0, T is a periodicity of the system information message, n is determined based on a position of the system information message in a list of system information messages comprised in the first system information, N is a quantity of symbols comprised in one radio frame, w is a length of the system information window associated with the system information message, mod represents a modulo operation, and FLOOR() represents a rounding-down operation.

9. The method according to any one of claims 1 to 8, wherein the first system information further comprises a value tag corresponding to the first feature, and the value tag indicates whether system information corresponding to the first feature is updated.

10. The method according to any one of claims 1 to 9, wherein the method further comprises:
receiving first update indication information from the network device, wherein the first update indication information indicates that system information related to a feature is updated.

11. The method according to claim 9 or 10, wherein the first update indication information is carried in a short message, DCI, or a paging message.

12. The method according to any one of claims 1 to 9, wherein the method further comprises:
receiving second update indication information from the network device, wherein the second update indication information indicates that the system information related to the first feature is updated.

13. The method according to claim 12, wherein the second update indication information is carried in a short message, DCI, or a paging message.

14. The method according to any one of claims 1 to 7, wherein the method further comprises:
receiving a paging message from the network device, wherein the paging message indicates that system information related to the first feature is updated, and the paging message is scrambled by using a paging radio network temporary identifier P-RNTI corresponding to the first feature, or a paging occasion of the paging message is determined based on identification information of the first feature.

15. A system information transmission method, comprising:
sending first system information, wherein the first system information indicates basic information required for communication, the first system information is further used for scheduling first subsystem information, and the first subsystem information is related to a first feature; and
sending the first subsystem information.

16. The method according to claim 15, wherein the method further comprises:
sending second system information and second subsystem information, wherein the second system information indicates other basic information required for communication, the second subsystem information is related to the first feature, and the second subsystem information and the first subsystem information comprise different information.

17. The method according to claim 16, wherein the first subsystem information indicates dedicated information required for a terminal device supporting the first feature to access a network; and the second subsystem information indicates at least one of the following:
dedicated information required for the terminal device supporting the first feature to perform intra-frequency cell reselection, inter-frequency cell reselection, and inter-RAT cell reselection;
a dedicated intra-frequency cell reselection parameter and a dedicated blacklist of intra-frequency cells that are required for the terminal device supporting the first feature to perform intra-frequency cell reselection;
a dedicated inter-frequency carrier reselection parameter, a dedicated inter-frequency cell reselection parameter, and a dedicated blacklist of inter-frequency cells that are required for the terminal device supporting the first feature to perform inter-frequency cell reselection; and
dedicated relevant information for the terminal device supporting the first feature to perform system universal mobile telecommunications system terrestrial radio access E-UTRA reselection.

18. The method according to claim 16, wherein the first system information further indicates a correspondence between the first subsystem information and the first feature.

19. The method according to any one of claims 16 to 18, wherein the second subsystem information is carried in a system information message, and start symbol a of a system information window associated with the system information message satisfies: $a = x mod N ;$ and
a system frame number SFN of a radio frame in which the system information window associated with the system information message is located satisfies: $SFN mod T = FLOOR \left(x/N\right) ,$ wherein
x=(n*α-1)×w, or x=(n-1)×w+L_{off1}, α is a number greater than 1, L_{off1} is an integer greater than 0, n is determined based on a position of the system information message in a list of system information messages comprised in the first system information, T is a periodicity of the system information message, N is a quantity of symbols comprised in one radio frame, w is a length of the system information window associated with the system information message, mod represents a modulo operation, and FLOOR() represents a rounding-down operation.

20. The method according to any one of claims 16 to 19, wherein the second subsystem information is carried in a system information message, and start symbol a of a system information window associated with the system information message satisfies: $a = x mod N ;$ and
a system frame number SFN of a radio frame in which the system information window associated with the system information message is located satisfies: $SFN mod T = FLOOR \left(x/N\right) + {L}_{off 2} ,$ wherein
x=(n-1)×w, L_{off2} is an integer greater than 0, T is a periodicity of the system information message, n is determined based on a position of the system information message in a list of system information messages comprised in the first system information, N is a quantity of symbols comprised in one radio frame, w is a length of the system information window associated with the system information message, mod represents a modulo operation, and FLOOR() represents a rounding-down operation.

21. The method according to any one of claims 15 to 20, wherein the first system information further comprises a value tag corresponding to the first feature, and the value tag indicates whether system information corresponding to the first feature is updated.

22. The method according to any one of claims 15 to 21, wherein the method further comprises:
sending first update indication information, wherein the first update indication information indicates that system information related to a feature is updated.

23. The method according to claim 22, wherein the first update indication information is carried in a short message, DCI, or a paging message.

24. The method according to any one of claims 15 to 21, wherein the method further comprises:
receiving second update indication information from the network device, wherein the second update indication information indicates that the system information related to the first feature is updated.

25. The method according to any one of claims 15 to 24, wherein the method further comprises:
sending a paging message, wherein the paging message indicates that the system information related to the first feature is updated, and the paging message is scrambled by using a paging radio network temporary identifier P-RNTI corresponding to the first feature, or a paging occasion of the paging message is determined based on identification information of the first feature.

26. A communication apparatus, comprising:
a communication unit, configured to receive first system information from a network device, wherein the first system information indicates basic information required for communication, the first system information is further used for scheduling first subsystem information, and the first subsystem information is related to a first feature; and
a processing unit, configured to obtain the first subsystem information based on the first system information if it is determined that the first feature is supported, wherein
the communication unit is configured to communicate with the network device based on the first system information and the first subsystem information.

27. A communication apparatus, comprising:
a processing unit, configured to send first system information through a communication unit, wherein the first system information indicates basic information required for communication, the first system information is further used for scheduling first subsystem information, and the first subsystem information is information related to a first feature; and
the communication unit, configured to send the first subsystem information.

28. A communication apparatus, comprising a processor, wherein
the processor is configured to execute a computer program or instructions stored in a memory, to cause the communication apparatus to implement the method according to any one of claims 1 to 25.

29. A computer-readable storage medium, storing a computer program or instructions, wherein when the computer program or the instructions are run on a computer, the computer is caused to implement the method according to any one of claims 1 to 25.

30. A chip, comprising a processor, wherein the processor is coupled to a memory, and is configured to execute a computer program or instructions stored in the memory, to cause the chip to implement the method according to any one of claims 1 to 25.
